# EUROPÄISCHE PATENTSCHRIFT

(11) **EP 0 698 445 B1**
(45) Veröffentlichungstag und Bekanntmachung des Hinweises auf die Patenterteilung: **06.10.1999**
(21) Anmeldenummer: 95202180.6
(22) Anmeldetag: 10.08.1995
(51) Int. Cl.: B23Q 9/00, B27C 5/06

(54) **Werkstückhalteeinrichtung zur Bearbeitung von Eckenabrundungen, insbesondere zur Holzbearbeitung**
Workholding device for working rounded corners, especially for woodworking
Dispositif de serrage de pièces pour travailler des coins arrondis, en particulier pour le travail du bois

(30) Priorität: 19.08.1994 IT BZ940051
(43) Veröffentlichungstag der Anmeldung: 28.02.1996
(73) Patentinhaber: Malfertheiner, Othmar, 39040 Siusi (Bolzano) (IT)
(72) Erfinder: Malfertheiner, Othmar, 39040 Siusi (Bolzano) (IT)
(74) Vertreter: Faraggiana, Vittorio, Dr. Ing.

(56) Entgegenhaltungen:
- EP-A- 0 419 455
- DE-A- 3 223 561
- FR-A- 2 533 162
- GB-A- 2 249 990
- US-A- 4 109 901

## Beschreibung

Die vorliegende Erfindung bezieht sich auf eine Werkstückhalteeinrichtung zur Bearbeitung von Eckenabrundungen, insbesondere zur Holzbearbeitung, gemäß dem Oberbegriff des Anspruches 1.

Es sind im allgemeinen Maschinenorgane bekannt, die dazu bestimmt sind, ein Werkstück in Bewegung zu versetzen oder festzulegen, das zur Bearbeitung an einer Werkzeugmaschine bestimmt ist.

Bis heute mußten die Werkstücke auf eine komplizierte Art und Weise an einem Tisch oder an einem Mittel verspannt werden, um eine relative Bewegung zwischen dem bearbeitenden Werkzeug und dem verspannten Werkstück herzustellen. In einigen Fällen wurde die Vorschubarbeit dem Werkzeug selbst, z.B. einer Profilfräse erteilt.

Im Dokument D1 (GB-A-2 249 990) wird eine Eckabrundungseinrichtung für Werkstücke beschrieben, wobei die Ecke durch eine Hauptfläche und zwei Seitenflächen unter einem Winkel gebildet wird, wobei die Einrichtung umfaßt:
- ein Tragteil zur Auflage des Werkstückes, wobei das Tragteil Befestigungsmittel zur Befestigung gegen die Hauptfläche und die beiden Seitenflachen derart besitzt, daß das Tragteil unter Beachtung der Ecke festgelegt ist,
- ein Montageteil zur Montage eines Werkzeuges, das mit dem Werkstück in Eingriff gebracht wird, um die Ecke abzurunden und
- eine Drehanordnung, die das Montageteil mit dem Tragteil verbindet, um das Werkzeug um eine zur Hauptfläche senkrechten Achse zu verschwenken,
- wobei die Drehanordnung derart positioniert ist, daß eine stetige Abrundung von der einen zur anderen Seitenfläche erreicht werden kann.

Bei dieser Einrichtung handelt es sich also um eine derartige Anbringung eines Werkzeuges, daß dieses gegenüber dem Werkstück verschwenkt werden kann. Nach der erfolgten Einspannung kann das Werkstück nicht in seiner Position verändert werden, sondern die Relativbewegung zwischen Werkstück und Werkzeug kann nur durch die Einstellung des Werkzeuges erfolgen. Für die Bearbeitung des Werkstückes selbst kann daher kein ortsgebundenes Werkzeug wie z. B. einer Profilfräsmaschine Verwendung finden, da das Werkzeug gegenüber dem Werkstück und nicht umgekehrt bewegt werden muß. Überdies ist die Anpassung der Einrichtung an die verschiedenen Abmessungen der Werkstücke aufwendig.

Die Aufgabe der vorliegenden Erfindung liegt darin, eine Werkstückhalteeinrichtung vorzuschlagen, die einfach zu bedienen ist, indem dem Werkstück selbst der erforderliche Vorschub erteilt wird, und die überdies rasch in ihrer Einstellung sein soll, um sich den verschiedenen Werkstückabmessungen anzupassen.

Diese Aufgabe wird erfindungsgemäß mit einer Werkstückhalteeinrichtung durch die im kennzeichnenden Teil des Anspruchs 1 angegebenen Merkmale gelöst.

Es ist zu bemerken, daß mit einer erfindungsgemäßen Einrichtung es einfach ermöglicht wird, ein Werkstück rasch zu verspannen, indem es von Hand aus in die Arbeitsposition gebracht wird, um es z.B. mit einem zylinderförmigen oder Profilwerkzeug, nach der Art einer Fräse zu bearbeiten, um auf einfache Art und Weise und ohne großen Aufwand Eckenabrundungen z.B. wie etwa halbrunde Übergänge zwischen zwei z.B. unter einem rechten Winkel angeordneten Kanten zu erhalten.

Weitere Merkmale der erfindungsgemäßen Einrichtung gehen aus den abhängigen Ansprüchen hervor.

Ausbildungen und Einzelheiten der erfindungsgemäßen Werkstückhaltereinrichtung gehen aus der folgenden Beschreibung einer bevorzugten, in der beigelegten Zeichnung dargestellten Ausführungsform hervor. Es zeigen,
- Figur 1: ein schematisches Schaubild einer erfindungsgemäßen Werkstückhalteeinrichtung in deren ersten bevorzugten Ausführungsform,
- Figur 2: ein Teilschaubild, aus der Sicht des Benutzers aus Figur 1, und
- Figur 3: eine Einzelheit der Figur 1 und 2.

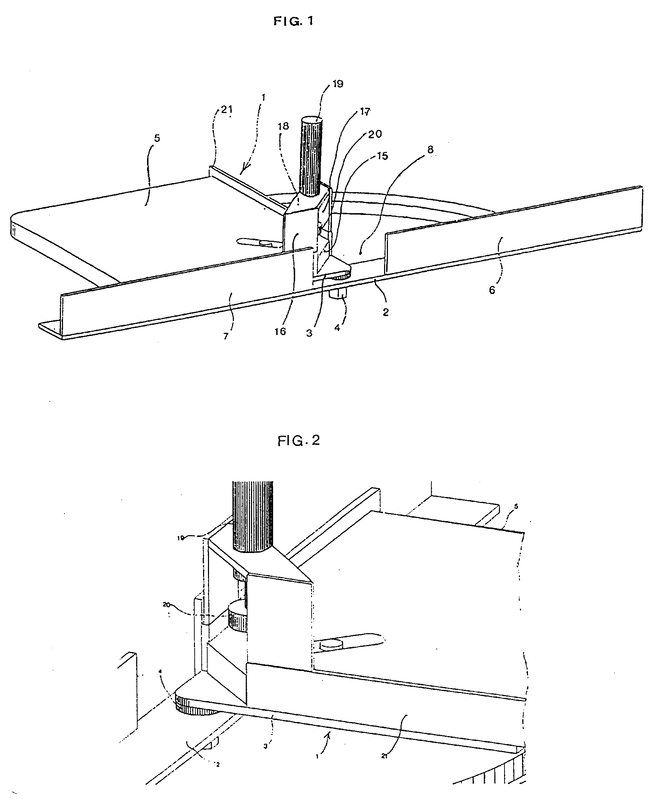

Wie in Figur 1 und 2 dargestellt, besteht die insgesamt mit der Bezugsziffer 1 angegebene Werkstückhalteeinrichtung aus einem Träger 2, einer Tragplatte 3, die über einen Bolzen 4 drehbar am Träger 2 angelenkt ist, um in einer horizontalen Ebene verschwenkt zu werden, und aus einer an dieser letzteren befestigbare Auflageplatte 5.

Die Platte 3 kann innerhalb zwei Endpositionen verschwenkt werden, die in diesem Fall durch untereinander mit dem Träger fluchtende Winkelstücke 6 und 7 festgelegt sind, die zwischen einander eine Durchtrittsöffnung 8 bilden, um Zugang zu dem Verschwenkbereich der Platte 3 zu ermöglichen.

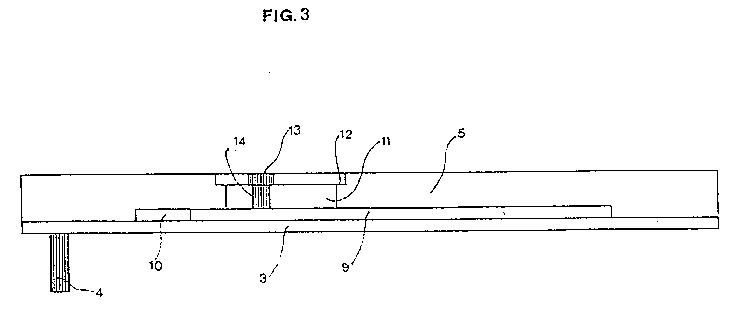

Wie in Figur 3 dargestellt, weist die Platte 3 oben einen Steg 9 auf, der sich im wesentlichen radial zu der durch den Zapfen 4 festgelegten Drehmitte erstreckt. Der Steg 9 greift in eine Nut 10 ein, die sich gleichfalls radial in der Auflageplatte 5 erstreckt, wodurch die Auflageplatte 5 selbst radial auf der Platte 3 verstellbar ist.

Die Nut 10 ist mit einem Langloch 11 verbunden, das die Auflageplatte 5 durchsetzt und mit einem Absatz 12 sich erweitert, um sich auf der Oberfläche der Auflageplatte 5 zu öffnen. Die Verbreiterungsweite des Langloches 11 ist derart, daß der Schraubenkopf einer Schraube 13 auf dem Absatz 12 auflagert, die mit ihrem Schraubabschnitt 14 am Steg 9 derart einschraubbar ist, daß die Auflageplatte 5 in verschiedenen Stellungen an der Tragplatte 3 festgelegt werden kann.

Die Auflageplatte 5 ist im Anlenkbereich der Plattenecke 3 am Träger 4 im wesentlichen, wie in 15 gezeigt, lotrecht zur Verstellrichtung der Auflageplatte 15 auf der Tragplatte 3 abgeschrägt. Die zusammenlaufenden Kanten der Auflageplatte 5 in Richtung der Abschrägung 15 gehen in zusammenlaufende Schenkel 16 und 17 eines Bügels 18 über. So bildet der Bügel 18 eine Halterung, die einen Eckbereich eines nicht gezeigten Werkstückes aufnimmt, dessen Ecke durch die Öffnung des Bügels selbst über die Abschrägung 15 hinaus vorsteht.

Zweckmäßigerweise hat die obere Traverse des Bügels 18 einen Handgriff 19, der zwischen den Bügelschenkeln 16 und 17 einen Niederhalter 20 trägt, der zwischen sich und der oberen Fläche der Auflageplatte das Werkstück verspannt.

Wie weiters ersichtlich, kann das auf der Platte 5 aufliegende Werkstück überdies durch eine Seitenleiste 21 in Position gehalten werden und hält somit mindestens einen Rand des Werkstückes selbst.

In einer bevorzugten Ausführungsform weisen die Ränder der Auflageplatte 5, die mit den Winkelstücken 7 und 6 in Anschlag kommen, zweckmäßige nicht gezeigte Abstandhalter auf, um die Möglichkeit zu besitzen, die Verschwenkplatte 5 genau innerhalb z.B. 180° zu halten, indem auf die Abstandhalter eingewirkt wird, wenn die Platte 5 selbst gegenüber der Platte 3 und daher gegenüber dem Bolzen 4 radial verstellt wird.

Der Handgriff selbst 19 könnte in einer weiteren bevorzugten Ausführungsform der Erfindung klarerweise durch einen pneumatischen bzw. hydraulischen, den Niederhalter 20 tragenden Zylinder, ersetzt werden.

## Patentansprüche

1. Werkstückhalteeinrichtung zur Bearbeitung von Eckabrundungen, insbesondere zur Holzbearbeitung, die auf einer Werkstückbearbeitungsmaschine angeordnet werden kann, dadurch gekennzeichnet, daß sie aus einem Träger (2), aus einer am Träger (2) drehbar angelenkten (4) Tragplatte (3), um in einer horizontalen Ebene verschwenkt zu werden, und aus einer Auflageplatte (5) für das Werkstück besteht, die an dieser verstellbar aufliegt, wobei die Tragplatte (3) zwischen zwei Endpositionen verschwenkbar ist, die durch jeweilige an Träger angeordnete Anschläge (6, 7) festgelegt werden, die zwischen einander eine Durchtrittsöffnung (8) bilden, in der ein Werkstück mittels eines Werkzeuges bearbeitet werden kann.

2. Einrichtung nach Anspruch 1, dadurch gekennzeichnet, daß die Tragplatte (3) mit einer Auflageplatte (5) versehen ist, die radial zur Anlenkung (4) der Tragplatte (3) verstellbar ist.

3. Einrichtung nach Anspruch 2, dadurch gekennzeichnet, daß die Tragplatte (3) oben einen Steg (9) aufweist, der sich im wesentlichen radial zur Anlenkung (4) erstreckt und in einer Nut (10) eingreift, die sich ebenfalls radial in der Auflageplatte (5) derart erstreckt, daß die Auflageplatte (5) gegenüber der Tragplatte (3) radial versetzbar wird.

4. Einrichtung nach Anspruch 3, dadurch gekennzeichnet, daß die Nut (10) mit einem Langloch (11) in Verbindung steht, das die Auflageplatte (5) durchsetzt und sich zu einem Absatz (12) erweitert, der die Auflage für den Schraubenkopf einer Schraube (13) bildet, die wahlweise in entsprechende im Steg (9) ausgearbeitete Bohrungen einschraubbar ist.

5. Einrichtung nach Anspruch 1 und 2, dadurch gekennzeichnet, daß die zusammenlaufenden Kanten der Tragplatte (3) bzw. der Auflageplatte (5) in gleichfalls zusammenlaufende Schenkel (16, und 17) eines Bügels (18) derart übergehen, daß der Bügel (18) eine Halterung bildet, die den Eckbereich eines Werkstückes aufnimmt, dessen Ecke durch die Öffnung des Bügels selbst vorsteht.

6. Einrichtung nach den vorstehenden Ansprüchen, dadurch gekennzeichnet, daß ein Werkstück auf der Tragplatte (3) bzw. auf der Auflageplatte (5) mittels eines Niederhalters (20) in dessen der Anlenkung (4) zugewandtem Eckbereich verspannbar ist.

7. Einrichtung nach Anspruch 6, dadurch gekennzeichnet, daß der Niederhalter durch einen pneumatischen Zylinder (10) getragen wird.

8. Einrichtung nach Anspruch 7, dadurch gekennzeichnet, daß der pneumatische Zylinder von der Traverse des Bügels (18) getragen wird.

9. Einrichtung nach den vorstehenden Ansprüchen, dadurch gekennzeichnet, daß die zusammenlaufenden Kanten der Tragplatte (3) bzw. der Auflageplatte (5), die in Richtung der Anlenkung (4) gerichtet sind, mit Anschlagleisten (21) versehen sind.

10. Einrichtung nach den vorstehenden Ansprüchen, dadurch gekennzeichnet, daß der Verschwenkwinkel in der horizontalen Ebene der Tragplatte (3) durch Anschläge einstellbar ist, die an den in Richtung der Anlenkung (4) der Platte selbst zusammenlaufenden Rändern vorgesehen sind.

## Claims

1. Workholding device for working rounded corners, especially for woodworking, adapted to be disposed on a workpiece-working machine, characterised in that it consists of a support (2), a bearing plate (3) rotatably hinged (4) on the support (2) to enable oscillation thereof in a horizontal plane, and a rest plate (5) for the workpiece to be machined which rests thereon in an adjustable manner, the bearing plate (3) being adapted to be rotated between two final positions to be determined by respective abutments (6, 7) located on the support and forming a passage clearance (8) between them, inside which a workpiece can be machined by a tool.

2. A device as claimed in claim 1, characterised in that the bearing plate (3) is provided with a rest plate (5) which is radially adjustable relative to the articulation (4) of the bearing plate (3).

3. A device as claimed in claim 2, characterised in that the bearing plate (3) at the upper part thereof has a key (9) substantially extending radially of the articulation (4) and engaging a groove (10) also radially extending in the rest plate (5), so as to make the rest plate (5) radially shiftable relative to the bearing plate (3).

4. A device as claimed in claim 3, characterised in that the groove (10) communicates with an elongated hole (11) passing through the rest plate (5) and widening out stepwise (12) so as to form the support for a screw head (13) to be screwed down by turns into corresponding holes formed in the key (9).

5. A device as claimed in claims 1 and 2, characterised in that the convergent edges of the bearing plate (3) or the rest plate (5) respectively, are connected to convergent sides (16 and 17) of a bracket (18) in such a manner that the bracket (18) forms a template receiving an angular region of a workpiece, the corner of which projects through the bracket opening.

6. A device as claimed in the preceding claims, characterised in that a workpiece can be locked on the bearing plate (3) or the rest plate (5) respectively, by a presser element (20) at its angular region turned to the articulation (4).

7. A device as claimed in claim 6, characterised in that the presser element is carried by a pneumatic cylinder (10).

8. A device as claimed in claim 7, characterised in that the pneumatic cylinder is held in the bracket (18) cross member.

9. A device as claimed in the preceding claims, characterised in that the convergent edges turned to the articulation (4) of the bearing plate (3) or the rest plate (5) respectively, are provided with abutment strips 21).

10. A device as claimed in the preceding claims, characterised in that the rotation angle in the horizontal plane of the bearing plate (3) is adjustable by means of abutments provided on the edges converging towards the articulation (4) of the plate itself.

## Revendications

1. Dispositif de serrage de pièces pour travailler des coins arrondies, en particulier pour le travail du bois, destiné à être placé sur une machine d'usinage de pièces, caractérisé en ce qu'il se compose d'un support (2), d'une plaque portante (3) articulée à pivotement (4) sur le support (2) pour causer son oscillation dans un plan horizontal, et d'une plaque d'appui (5) de la pièce à travailler, laquelle repose de manière réglable sur celle-ci, la plaque portante (3) pouvant être tournée entre deux positions finales qui sont déterminées par des butées (6, 7) respectives disposées sur le support et formant entre elles une lumière de passage (8) dans laquelle une pièce peut être travaillée à l'aide d'un outil.

2. Dispositif selon la revendication 1, caractérisé en ce que la plaque portante (3) est pourvue d'une plaque d'appui (5) réglable en sens radial par rapport à l'articulation (4) de la plaque portante (3).

3. Dispositif selon la revendication 2, caractérisé en ce que la plaque portante (3) présente à sa partie supérieure une clavette (9) s'étendant essentiellement en sens radial par rapport à l'articulation (4) et engageant une rainure (10) s'étendant elle-aussi en sens radial dans la plaque d'appui (5), de manière à rendre la plaque d'appui (5) déplaçable en sens radial par rapport à la plaque portante (3).

4. Dispositif selon la revendication 3, caractérisé en ce que la rainure (10) est en communication avec un trou allongé (11) traversant la plaque d'appui (5) et s'élargissant en gradin (12) de manière à former l'appui de la tête d'une vis (13) à visser alternativement dans des trous correspondants ménagés dans la clavette (9).

5. Dispositif selon les revendications 1 et 2, caractérisé en ce que les bords convergents de la plaque portante (3) ou respectivement de la plaque d'appui (5) sont reliés à des flancs également convergents (16 et 17) d'un étrier (18), de sorte que l'étrier (18) forme un gabarit recevant une zone angulaire d'une pièce à travailler, dont le coin fait saillie à travers l'ouverture de l'étrier lui-même.

6. Dispositif selon les revendications précédentes, caractérisé en ce qu'une pièce à travailler peut être verrouillée sur la plaque portante (3) ou respectivement sur la plaque d'appui (5) par un presseur (20) en correspondance de sa zone angulaire tournée vers l'articulation (4).

7. Dispositif selon la revendication 6, caractérisé en ce que le presseur est porté par un cylindre pneumatique (10).

8. Dispositif selon la revendication 7, caractérisé en ce que le cylindre pneumatique est porté par la traverse de l'étrier (18).

9. Dispositif selon les revendications précédentes, caractérisé en ce que les bords convergents de la plaque portante (3), ou respectivement de la plaque d'appui (5), dirigés vers l'articulation (4), sont munis de lattes de butée (21).

10. Dispositif selon les revendications précédentes, caractérisé en ce que l'angle de rotation dans le plan horizontal de la plaque portante (3) est réglable à l'aide de butées prévues sur les bords convergeant vers l'articulation (4) de la plaque elle-même.
